# EUROPEAN PATENT SPECIFICATION

(11) **EP 2 963 839 B1**
(45) Date of publication and mention of the grant of the patent: **24.10.2018**
(21) Application number: 14882138.2
(22) Date of filing: 29.04.2014
(51) Int. Cl.: H04B 5/00, H04W 4/00, H04W 84/18, H04W 88/08

(54) **DATA TRANSMISSION METHOD AND TERMINAL**
DATEIÜBERTRAGUNGSVERFAHREN UND ENDGERÄT
PROCÉDÉ DE TRANSMISSION DE DONNÉES ET TERMINAL

(43) Date of publication of application: 06.01.2016
(73) Proprietor: Huawei Device Co., Ltd., Shenzhen, Guangdong 518129 (CN)
(72) Inventor: HE, Ruifeng, Shenzhen Guangdong 518129 (CN); WANG, Xiangyang, Shenzhen Guangdong 518129 (CN); LI, Honggang, Shenzhen Guangdong 518129 (CN)
(74) Representative: Thun, Clemens
(86) International application number: PCT/CN2014/076428
(87) International publication number: WO 2015/165024

(56) References cited:
- WO-A1-2013/143414
- CN-A- 103 368 611
- CN-A- 103 596 230
- US-A1- 2011 269 504
- US-A1- 2012 244 814
- US-A1- 2012 244 814
- US-A1- 2012 311 176

## Description

### TECHNICAL FIELD

The present invention relates to the communications field, and in particular, to a data transmission method and terminal.

### BACKGROUND

With popularization of a terminal device, currently a mobile terminal on a LAN (Local Area Network, local area network) side connects, by using WiFi (Wireless Fidelity, Wireless Fidelity), to an access terminal that is used as an application access point (Access Point, AP), so as to implement data transmission. However, some access terminals that are used as APs may implement a function of a Bluetooth (Blootooth, BT) hotspot. Therefore, the mobile terminal on the LAN side may connect, by using Bluetooth, to the access terminal that is used as an AP.

Using WiFi as a data transmission channel needs relatively high power consumption. Meanwhile, when the access terminal that is used as an AP implements data transmission to the mobile terminal on the LAN side by using WIFI, even though there is no data communication, relatively high power consumption is also needed to maintain a WiFi connection. Currently, the access terminal that is used as an AP supports functions of a Bluetooth hotspot and a WiFi hotspot, and provides a capability of network access for the mobile terminal on the LAN side. However, a switchover between the Bluetooth hotspot and the WiFi hotspot needs to be manually performed by a user, and in a switchover process, the mobile terminal on the LAN side cannot be notified of the switchover between the Bluetooth hotspot and the WiFi hotspot. Therefore, usability is poor and user experience is inferior.

WO 2013/143414 A1 describes a file transmission method and a mobile terminal, wherein the method comprises: when receiving a request sent by a user for transmitting a file to a second mobile terminal, a first mobile terminal sending the file to the second mobile terminal by using a first transmission mode; during the file transmission process, determining whether the size of the remaining file is greater than or equal to a preset threshold in real time; if yes, determining whether the first mobile terminal meets a condition of being capable of establishing a connection with the second mobile terminal under a second transmission mode and having a greater transmission rate under the second transmission mode than that under the first transmission mode; if the condition is met, switching the transmission mode, and transmitting the remaining file by using the second transmission mode. The mobile terminal comprises a receiving module, a sending module, a determining module, and a switching module.

US 2012/0311176 A1 describes a first device and a second device communicating with each other using a first communications protocol over a first communications media. The first device detects a need to modify a communications bandwidth with the second device based on an operating condition of the first device at a point in time. The first device negotiates with the second device to identify a second communications protocol that is suitable for the operating condition based on a set of one or more rules associated with the first device. Both the first and second devices switch, without user intervention, from the first communications protocol to the second communications protocol to communicate with the second device using the second communications protocol over a second communications media.

### SUMMARY

Embodiments of the present invention provide a data transmission method and terminal of good user experience.

According to a first aspect of the present invention, a data transmission method is provided, including: performing, by a first terminal, data transmission to a second terminal by using a first communication link; detecting, by the first terminal, a rate of the data transmission; determining, by the first terminal according to the rate of the data transmission, whether a preset rate condition is met; when the rate of the data transmission meets the preset rate condition, instructing, by the first terminal, the second terminal to perform data transmission to the first terminal by using the second communication link; and performing, by the first terminal, data transmission to the second terminal by using the second communication link..

When the first communication link is specifically Wireless Fidelity WIFI, the second communication link is specifically Bluetooth, and that the rate of the data transmission meets the preset rate condition is specifically that the rate of the data transmission is lower than a low rate threshold.

When the first communication link is specifically Bluetooth, the second communication link is specifically WIFI, and that the rate of the data transmission meets the preset rate condition is specifically that the rate of the data transmission is higher than a high rate threshold. The high rate threshold is higher than the low rate threshold.

With reference to the first aspect, in a first possible implementation manner, data transmitted by using the second communication link includes: to-be-sent data stored in a memory of the transceiver on the first communication link.

With reference to the first aspect or the first possible implementation manner, when detecting that data transmission is performed to the second terminal by using the second communication link, the first terminal disables the transceiver on the first communication link.

According to a second aspect, a first terminal of data transmission is provided, where the first terminal includes: a transceiver on a first communication link, a transceiver on a second communication link, a processor, and a memory. The transceiver on the first communication link is configured to perform data transmission to a second terminal by using the first communication link. The processor is configured to detect a rate of the data transmission; determine, according to the rate of the data transmission, whether a preset rate condition is met; when the rate of the data transmission meets the preset rate condition, instruct the second terminal to perform data transmission to the first terminal by using the second communication link; and instruct the transceiver on the second communication link to perform data transmission to the second terminal by using the second communication link. The transceiver on the second communication link is configured to perform data transmission to the second terminal by using the second communication link.

When the first communication link is specifically Wireless Fidelity WIFI, the second communication link is specifically Bluetooth, and that the rate of the data transmission meets the preset rate condition is specifically that the rate of the data transmission is lower than a low rate threshold.

When the first communication link is specifically Bluetooth, the second communication link is specifically WIFI, and that the rate of the data transmission meets the preset rate condition is specifically that the rate of the data transmission is higher than a high rate threshold. The high rate threshold is higher than the low rate threshold.

With reference to the second aspect, in a first possible implementation manner, the transceiver on the first communication link includes the memory; the memory is configured to store data received and sent by the transceiver on the first communication link; and data transmitted by using the second communication link includes to-be-sent data stored in the memory of the transceiver on the first communication link.

With reference to the second aspect or the first possible implementation manner, the processor is further configured to detect that data transmission is performed to the second terminal by using the second communication link; and when detecting that data transmission is performed with the second terminal by using the second communication link, the processor disables the transceiver on the first communication link.

It can be learned from the foregoing technical solutions that the embodiments of the present invention have the following advantages:

When a first terminal and a second terminal perform low rate and high rate data transmission, seamless switchover experience of performing data transmission by using WiFi or Bluetooth is ensured.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person skilled in the art may still derive other drawings from these accompanying drawings without creative efforts.
FIG. 1 is a schematic diagram of an application scenario of data transmission according to an embodiment of the present invention;
FIG. 2 is a schematic diagram of a data transmission method according to an embodiment of the present invention;
FIG. 3A is a schematic diagram of a data transmission method according to another embodiment of the present invention;
FIG. 3B is a schematic diagram of a data transmission method according to another embodiment of the present invention;
FIG. 4 is a schematic diagram of a data transmission method according to another embodiment of the present invention;
FIG. 5A is a schematic diagram of a data transmission method according to another embodiment of the present invention;
FIG. 5B is a schematic diagram of a data transmission method according to another embodiment of the present invention;
FIG. 6 is a schematic diagram of a data transmission method according to another embodiment of the present invention; and
FIG. 7 is a structural diagram of a first terminal 70 of data transmission according to an embodiment of the present invention.

### DESCRIPTION OF EMBODIMENTS

The invention is defined by the appended claims. In the following, embodiments not falling within the scope of the claims should be understood as examples useful to understand the invention.

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person skilled in the art based on the embodiments of the present invention without creative efforts shall fall within the protection scope of the present invention.

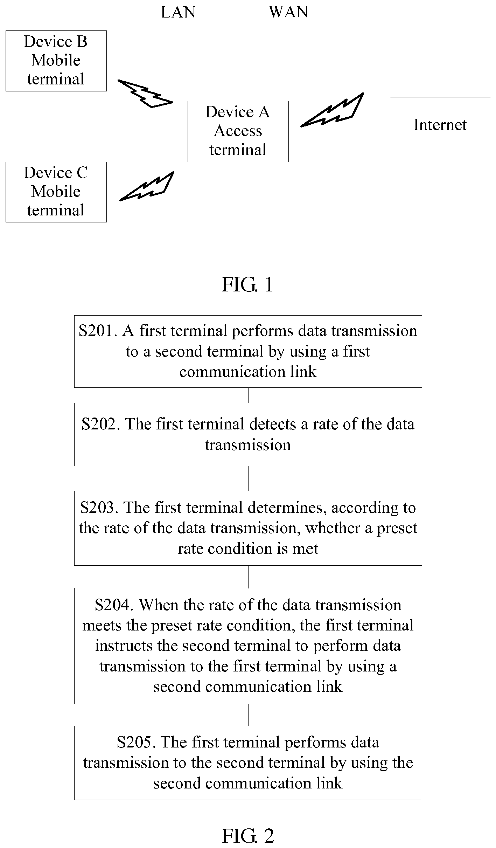

The embodiments of the present invention provide a data transmission method. FIG. 1 is a schematic diagram of an application scenario of data transmission according to an embodiment of the present invention. As shown in FIG. 1, a device A is an access terminal and is used as an application access point (Access Point, AP) of a WAN (Wide Area Network, wide area network) to access a remote network. A device B and a device C are mobile terminals on a LAN (Local Area Network, local area network) side and connect, by using WiFi (Wireless Fidelity, Wireless Fidelity), to the device A that is used as an AP, so as to implement data transmission. The mobile terminal on the LAN side may be a terminal device, such as a mobile phone, a PC (Personal Computer, personal computer), or a tablet computer PAD. The access terminal may be a terminal device, such as a wireless router, a portable router, a WiFi modem, a mobile phone, a PC, or a tablet computer PAD.

Currently, some access terminals have both functions of a Bluetooth hotspot and a WiFi hotspot. However, a switchover between the Bluetooth hotspot and the WiFi hotspot needs to be manually performed by a user, and in a switchover process, the mobile terminal on the LAN side cannot be notified of the switchover between the Bluetooth hotspot and the WiFi hotspot. In view of this, this embodiment of the present invention provides a switchover method of data transmission, so as to resolve a switchover problem between the Bluetooth hotspot and the WiFi hotspot of the access terminal.

In the present invention, an involved transceiver may be a transceiver that has a hotspot function, or may be a transceiver that has a single point function, where the transceiver is not specifically limited herein.

In the present invention, an involved first communication link may be WIFI, Bluetooth, infrared, or NFC (Near Field Communication, near field communication); and a second communication link may also be WIFI, Bluetooth, infrared, or NFC. In the embodiments of the present invention, the first communication link and the second communication link are different communication links. A transceiver on the first communication link may be a WiFi transceiver, a Bluetooth transceiver, an infrared transceiver, or an NFC transceiver; and a transceiver on the second communication link may be a WiFi transceiver, a Bluetooth transceiver, an infrared transceiver, or an NFC transceiver. In the embodiments of the present invention, the transceiver on the first communication link and the transceiver on the second communication link are different transceivers on communication links. The transceiver described in the present invention includes an antenna, a filter, an A/D converter (analog to digital converter), a D/A converter (digital to analog converter), or the like. The WiFi transceiver is used as an example and includes an antenna that supports a WiFi operating frequency band, a filter, an A/D converter (analog to digital converter), a D/A converter (digital to analog converter), or the like. The Bluetooth transceiver, the infrared transceiver, or the NFC transceiver has a structure similar to a structure of the WiFi transceiver, and their structures are not described herein again.

The present invention is specifically described by using an example that an access terminal switches from performing data transmission to a mobile terminal by using WiFi to performing data transmission to the mobile terminal by using Bluetooth, and switches from performing data transmission to the mobile terminal by using Bluetooth to performing data transmission to the mobile terminal by using WIFI.

FIG. 2 is a schematic diagram of a data transmission method according to an embodiment of the present invention. A first terminal involved in this embodiment of the present invention may be an access terminal or a mobile terminal, and a second terminal may be an access terminal or a mobile terminal. When the first terminal is an access terminal, the second terminal is a mobile terminal; when the first terminal is a mobile terminal, the second terminal is an access terminal. In this embodiment of the present invention, an example that the first terminal is an access terminal and the second terminal is a mobile terminal is used for description. The method includes the following steps:
S201. The first terminal performs data transmission to the second terminal by using a first communication link.

The first communication link may be WIFI, Bluetooth, infrared, or NFC (Near Field Communication, near field communication).

That the first terminal performs data transmission to the second terminal by using a first communication link specifically may be: An access terminal performs data transmission to a mobile terminal by using WIFI, and the mobile terminal may connect to the access terminal by using WIFI, so as to watch a video, browse a web page, implement instant messaging, or listen to music. The access terminal may access a remote network by using Ethernet, WIFI, or a telecommunications network.

In another embodiment of the present invention, that the first terminal performs data transmission to the second terminal by using a first communication link specifically may be: An access terminal performs data transmission to a mobile terminal by using Bluetooth, and the mobile terminal may connect to the access terminal by using Bluetooth, so as to watch a video, browse a web page, implement instant messaging, or listen to music. The access terminal may access a remote network by using Ethernet, WIFI, or a telecommunications network.

S202. The first terminal detects a rate of the data transmission.

That the first terminal detects a rate of the data transmission specifically may be: collecting statistics about traffic within a period of time, and calculating average traffic within a unit time according to the time and the collected traffic, where the average traffic within a unit time is the rate of the data transmission. For example, the first terminal continuously collects statistics about traffic of received data and sent data in three 20 seconds, and calculates the rate of the data transmission as 900 Kbps (Kbps).

S203. The first terminal determines, according to the rate of the data transmission, whether a preset rate condition is met.

When the first communication link is WIFI, that the first terminal determines, according to the rate of the data transmission, whether a preset rate condition is met specifically may be: When the rate of the data transmission of the first terminal is lower than a low rate threshold, the rate of the data transmission that is detected by the first terminal meets the preset rate condition.

When the first communication link is Bluetooth, that the first terminal determines, according to the rate of the data transmission, whether a preset rate condition is met specifically may be: When the rate of the data transmission of the first terminal is higher than a high rate threshold, the rate of the data transmission that is detected by the first terminal meets the preset rate condition.

There are many manners of determining the low rate threshold and the high rate threshold, and the low rate threshold and the high rate threshold may be set for the first terminal during factory delivery; or the low rate threshold and the high rate threshold may be set by a user after a lowest rate value and a highest rate value of the data transmission are collected and a recommended low rate threshold and a recommended high rate threshold are sent to the user according to a statistical result.

The low rate threshold and the high rate threshold in the present invention may be the same or may be different. Generally, the high rate threshold is higher than the low rate threshold, so that generation of a ping-pong effect can be avoided. The ping-pong effect is specifically: For some reason, a base station is continuously handed over back and forth between two cells, which seems like that a ping-pong ball is continuously hit back and forth.

S204. When the rate of the data transmission meets the preset rate condition, the first terminal instructs the second terminal to perform data transmission to the first terminal by using the second communication link.

The second communication link may be WIFI, Bluetooth, infrared, or NFC (Near Field Communication, near field communication). The second communication link and the first communication link are different communication links.

When the first communication link is WiFi and the second communication link is Bluetooth, and the rate of the data transmission is lower than the low rate threshold, the first terminal instructs the second terminal to perform data transmission to the first terminal by using Bluetooth.

For example, when the low rate threshold is 1.3 Mbps (Mbps), and the rate of the data transmission is 900 Kbps, that is, when the rate of the data transmission is lower than the low rate threshold, the first terminal instructs the second terminal to perform data transmission to the first terminal by using Bluetooth.

When the first terminal instructs the second terminal to perform data transmission to the first terminal by using Bluetooth, an instruction may be sent in a broadcast manner, a multicast manner, or a unicast manner.

That the first terminal sends an instruction in the broadcast manner specifically may be: The first terminal sends a predefined packet of a special format by using WiFi to a specific port of the second terminal to instruct the second terminal to perform data transmission to the first terminal by using Bluetooth.

In another embodiment of the present invention, sending an instruction in the multicast manner or the unicast manner is similar to sending an instruction in the broadcast manner, and is not described herein again. When the first communication link is Bluetooth and the second communication link is WIFI, and the rate of the data transmission is higher than the high rate threshold, the first terminal instructs the second terminal to perform data transmission to the first terminal by using WIFI.

For example, when the high rate threshold is 2.0 Mbps (Mbps), and the rate of the data transmission is 2.5 Mbps, that is, when the rate of the data transmission is higher than the high rate threshold, the first terminal instructs the second terminal to perform data transmission to the first terminal by using WIFI.

When the first terminal instructs the second terminal to perform data transmission to the access terminal by using WIFI, an instruction may be sent in the broadcast manner, the multicast manner, or the unicast manner.

That the first terminal sends an instruction in the broadcast manner to the second terminal specifically may be: The first terminal sends a predefined packet of a special format by using Bluetooth to a specific port of the second terminal, where the packet is used to instruct the second terminal to perform data transmission to the first terminal by using WIFI.

In another embodiment of the present invention, sending an instruction in the multicast manner or the unicast manner is similar to sending an instruction in the broadcast manner, and is not described herein again.

In another embodiment of the present invention, when the first terminal instructs the second terminal to perform data transmission to the first terminal by using WIFI, an SSID (Service Set Identifier, service set identifier) of the first terminal may be carried.

S205. The first terminal performs data transmission to the second terminal by using the second communication link.

Data transmitted by using the second communication link includes: to-be-sent data stored in a memory of a transceiver on the first communication link.

In another embodiment of the present invention, the first terminal may perform, by using the second communication link, data transmission to the second terminal according to a transmission acknowledgement request, which is sent by the second terminal, of the second communication link.

When the second communication link is Bluetooth, the first terminal performs data transmission to the second terminal by using Bluetooth, where data transmitted by using Bluetooth includes: to-be-sent data stored in a memory of a WiFi transceiver.

When the first terminal instructs the second terminal to perform data transmission to the first terminal by using Bluetooth, an instruction carries a Bluetooth name of the first terminal. The Bluetooth name may be an SSID (Service Set Identifier, service set identifier) of the first terminal, a Media Access Control (Media Access Control, MAC) address of the first terminal, or a Bluetooth name named in the first terminal.

In another embodiment of the present invention, when the first terminal instructs the second terminal to perform data transmission to the first terminal by using Bluetooth, and an instruction does not carry a Bluetooth name of the first terminal, that the second terminal stores the Bluetooth name of the first terminal specifically may be: When the first terminal performs data transmission to the second terminal by using WIFI, the first terminal may send the Bluetooth name to the second terminal for storing. When the second communication link is WIFI, the first terminal performs data transmission to the second terminal by using WIFI, where data transmitted by using WiFi includes: to-be-sent data stored in a memory of a Bluetooth transceiver.

When the first terminal instructs the second terminal to perform data transmission to the first terminal by using WIFI, an instruction carries an SSID of the first terminal.

In another embodiment of the present invention, when the first terminal instructs the second terminal to perform data transmission to the first terminal by using WIFI, and an instruction does not carry an SSID of the first terminal, that the second terminal stores the SSID of the first terminal specifically may be: When the first terminal performs data transmission to the second terminal by using Bluetooth, the first terminal may send the SSID to the second terminal for storing.

In another embodiment of the present invention, if a PIN (Personal Identification Number, personal identification number of a subscriber identity module card) needs to be entered, an application program inside the second terminal prompts a user to enter the PIN, and a password that is used when the first terminal is connected to the second terminal by using the second communication link may also be automatically entered by the application program and used as the PIN to complete an automatic connection. Performing Bluetooth pairing or WiFi connection in a manner of entering a PIN ensures reliability of a Bluetooth or WiFi connection, and furthermore according to the user's input, ensures security of the Bluetooth or WiFi connection.

In another embodiment of the present invention, after detecting that data transmission is performed to the second terminal by using Bluetooth, the first terminal disables a WiFi transceiver. In a manner of first connecting to the Bluetooth transceiver and then disconnecting the WiFi transceiver, effectiveness of data transmission is maintained, and impact, on a user, caused by a switchover between communication links is reduced.

During a low rate data transmission service, a first terminal switches from performing data transmission to a second terminal by using WiFi to performing data transmission to the second terminal by using Bluetooth, which ensures seamless switchover experience of WiFi data transmission and Bluetooth data transmission during low rate data transmission. Furthermore, when the first terminal performs data transmission to the second terminal by using WIFI, a relatively high power is needed; and during low rate data transmission, the access terminal performs data transmission to the mobile terminal by using Bluetooth, which reduces total power consumption of data transmission between the first terminal and the second terminal.

In another embodiment of the present invention, the Bluetooth transceiver is disabled after it is detected that data transmission is performed to the second terminal by using WIFI. In a manner of first connecting to the WiFi transceiver and then disconnecting the Bluetooth transceiver, effectiveness of data transmission is maintained, and impact, on a user, caused by a switchover between different communication links is reduced. During a high rate data transmission service, a first terminal switches from performing data transmission to a second terminal by using Bluetooth to performing data transmission to the second terminal by using WIFI, which ensures seamless switchover experience of WiFi data transmission and Bluetooth data transmission during a switchover of a high rate data service.

In this embodiment of the present invention, during data transmission at different rates, a first terminal detects a rate of data transmission; and when the rate of the data transmission meets a preset rate condition, automatically switches from performing data transmission to a second terminal by using a first communication link to performing data transmission to the second terminal by using a second communication link, which ensures seamless switchover experience of communication links at two rates during low rate and high rate data transmission. Furthermore, on a condition that data transmission is performed at different rates, communication links at different rates are selected to perform transmission, which reduces total power consumption of an access terminal and a mobile terminal.

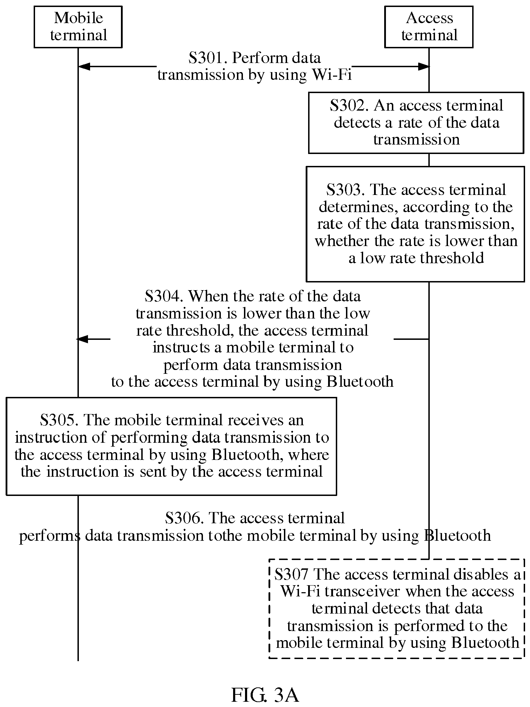

FIG. 3A is a schematic diagram of a data transmission method according to another embodiment of the present invention. In this embodiment of the present invention, an access terminal enables a WiFi transceiver, and the access terminal may be used as an AP or may be used as a single point to perform data transmission to a mobile terminal. The mobile terminal first performs data transmission to the access terminal by using WIFI. In this embodiment of the present invention, when the access terminal is an AP, multiple mobile terminals may connect to the access terminal, and methods for connecting to the access terminal by all mobile terminals are the same. An example that one mobile terminal performs data transmission to the access terminal is used for description in the following.

S301. The access terminal performs data transmission to the mobile terminal by using WIFI.

The mobile terminal performs data transmission to the access terminal by using WIFI, for example, watching a video, browsing a web page, implementing instant messaging, or listening to music. The access terminal then accesses a remote network by using Ethernet, WIFI, or a telecommunications network.

S302. The access terminal detects a rate of the data transmission.

That the access terminal detects a rate of the data transmission specifically may be: collecting statistics about traffic within a period of time, and calculating average traffic within a unit time according to the time and the collected traffic, where the average traffic within a unit time is the rate of the data transmission. For example, the access terminal continuously collects statistics about traffic of received data and sent data in three 20 seconds, and calculates the rate of the data transmission as 900 Kbps (Kbps).

S303. The access terminal determines, according to the rate of the data transmission, whether the rate is lower than a low rate threshold.

There are many manners of determining the low rate threshold, and the low rate threshold may be set for the access terminal during factory delivery; or the low rate threshold is set by a user after a lowest rate value of the data transmission is collected and a recommended low rate threshold is sent to the user according to a statistical result.

S304. When the rate of the data transmission is lower than the low rate threshold, the access terminal instructs the mobile terminal to perform data transmission to the access terminal by using Bluetooth.

For example, when the low rate threshold is 1.3 Mbps (Mbps), and the rate of the data transmission is 900 Kbps, that is, when the rate of the data transmission is lower than the low rate threshold, the access terminal instructs the mobile terminal to perform data transmission to the access terminal by using Bluetooth. When the access terminal instructs the mobile terminal to perform data transmission to the access terminal by using Bluetooth, an instruction may be sent in a broadcast manner, a multicast manner, or a unicast manner.

That the access terminal sends a broadcast message to the mobile terminal specifically may be: The access terminal sends a predefined packet of a special format by using WiFi to a specific port of the mobile terminal, where the packet is used to instruct the mobile terminal to perform data transmission to the access terminal by using Bluetooth.

In another embodiment of the present invention, sending an instruction in the multicast manner or the unicast manner is similar to sending an instruction in the broadcast manner, and is not described herein again. In another embodiment of the present invention, when the access terminal instructs the mobile terminal to perform data transmission to the access terminal by using Bluetooth, an instruction may carry a Bluetooth name of the access terminal.

S305. The mobile terminal receives an instruction of performing data transmission to the access terminal by using Bluetooth, where the instruction is sent by the access terminal.

S306. The access terminal performs data transmission to the mobile terminal by using Bluetooth.

Data during data transmission performed by the access terminal with the mobile terminal by using Bluetooth includes: to-be-sent data stored in a memory of the WiFi transceiver. The memory may be a cache.

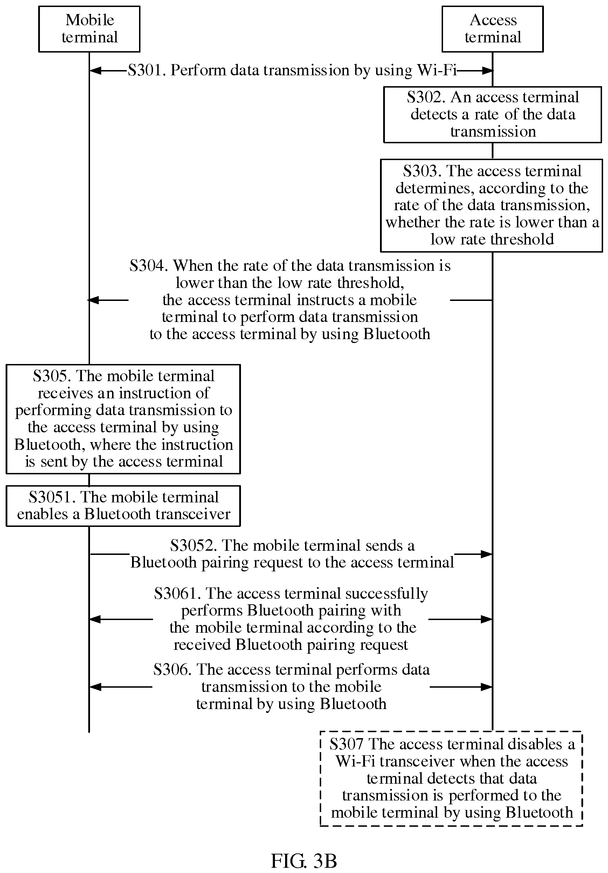

FIG. 3B is a schematic diagram of a data transmission method according to another embodiment of the present invention. In another embodiment of the present invention, after performing step S305, and before performing S306, the mobile terminal may further perform:
S3051. The mobile terminal enables a Bluetooth transceiver. In another embodiment of the present invention, after receiving an instruction from the access terminal, the mobile terminal may determine a distance between the mobile terminal and the access terminal, so as to determine whether the distance between the mobile terminal and the access terminal meets a preset distance condition; when the distance meets the preset distance condition, enable the Bluetooth transceiver.

In another embodiment of the present invention, the mobile terminal may determine received signal strength of WiFi so as to determine to enable the Bluetooth transceiver. When the received signal strength of WiFi meets a condition, the mobile terminal enables the Bluetooth transceiver. For example, the mobile terminal compares an RSSI (Received Signal Strength Indication, received signal strength indicator) with a signal strength threshold, and when the RSSI is higher than the signal strength threshold, that is, the received signal strength of WiFi meets the condition, it indicates that a distance between the mobile terminal and the access terminal falls within a distance range in which Bluetooth pairing can be successfully performed. When the RSSI is lower than the signal strength threshold, that is, the received signal strength of WiFi does not meet the condition, it indicates that the distance between the mobile terminal and the access terminal falls within a distance range in which Bluetooth pairing cannot be successfully performed. Therefore, the mobile terminal keeps connecting to the access terminal by using WIFI, and does not perform the following steps S3052 to S307.

In another embodiment of the present invention, after receiving an instruction from the access terminal, the mobile terminal may further detect a distance between the mobile terminal and the access terminal according to distance detection, so as to determine whether to enable the Bluetooth transceiver.

In another embodiment of the present invention, the access terminal may also detect a distance between the mobile terminal and the access terminal according to distance detection. The access terminal may determine, according to the detected distance between the mobile terminal and the access terminal, whether to perform the following steps S3052 to S307.

In the present invention, there are many methods used for determining the distance between the mobile terminal and the access terminal, which are described herein only by using an example; and details are not described herein again.

S3052. The mobile terminal sends a Bluetooth pairing request to the access terminal.

When the access terminal instructs the mobile terminal to perform data transmission to the access terminal by using Bluetooth, and an instruction carries a Bluetooth name of the access terminal, the mobile terminal sends the Bluetooth pairing request to the access terminal according to the Bluetooth name of the access terminal. The Bluetooth name may be an SSID of the access terminal, a MAC address of the access terminal, or a Bluetooth name named in the access terminal.

In another embodiment of the present invention, when the access terminal instructs the mobile terminal to perform data transmission to the access terminal by using Bluetooth, and an instruction does not carry a Bluetooth name of the access terminal, that the mobile terminal stores the Bluetooth name of the access terminal specifically may be: When the mobile terminal performs data transmission to the access terminal by using WIFI, the access terminal may send the Bluetooth name to the mobile terminal for storing.

S3061. The access terminal successfully performs Bluetooth pairing with the mobile terminal according to the received Bluetooth pairing request.

The access terminal successfully performs Bluetooth pairing with the mobile terminal according to the received Bluetooth pairing request. After the mobile terminal performs Bluetooth pairing with the access terminal, the mobile terminal establishes a PAN (Personal Area Network, personal area network) connection to the access terminal, and the access terminal performs data transmission to the mobile terminal by using Bluetooth.

When the access terminal is performing Bluetooth pairing with the mobile terminal according to the received Bluetooth pairing request, if a PIN (Personal Identification Number, personal identification number of a subscriber identity module card) needs to be entered, an application program inside the mobile terminal prompts a user to enter the PIN, and a password that is used when the mobile terminal is connected to the access terminal by using WiFi may also be automatically entered by the application program and used as the PIN to complete an automatic connection. Performing Bluetooth pairing in a manner of inputting a PIN guarantees reliability of a Bluetooth connection, and furthermore according to the user's input, ensures security of the Bluetooth connection.

In another embodiment of the present invention, after the access terminal performs data transmission to the access terminal by using Bluetooth, that is, after the access terminal performs step S306, the access terminal may further perform the following step:
S307. The access terminal disables a WiFi transceiver when the access terminal detects that data transmission is performed to the mobile terminal by using Bluetooth.

In a manner of first connecting to the Bluetooth transceiver and then disconnecting the WiFi transceiver, effectiveness of data transmission is maintained, and impact, on a user, caused by a switchover between communication links is reduced.

In this embodiment of the present invention, during low rate data transmission, an access terminal automatically switches from performing data transmission by using WiFi to performing data transmission by using Bluetooth, which ensures seamless switchover experience of WiFi data transmission and Bluetooth data transmission during low rate data transmission; furthermore, when the access terminal maintains a WiFi connection, a relatively high power is needed; and during a low rate data service, the access terminal switches to performing transmission with a mobile terminal by using Bluetooth, which reduces total power consumption of the access terminal and the mobile terminal.

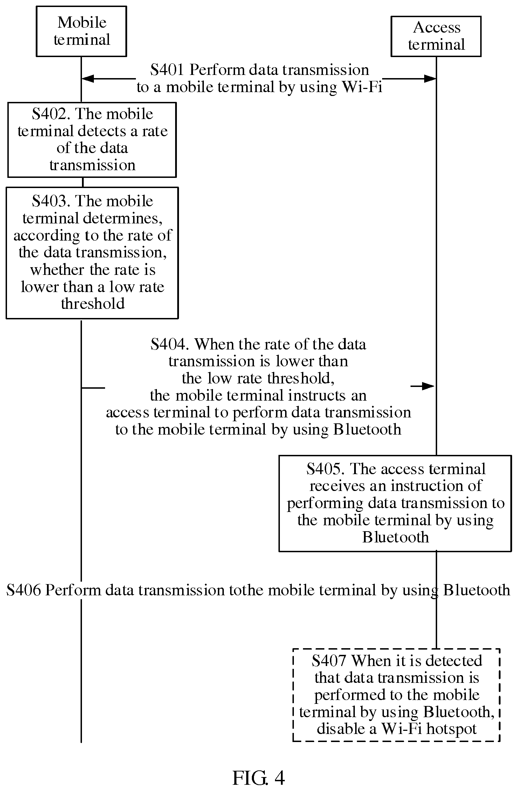

FIG. 4 is a schematic diagram of a data transmission method according to another embodiment of the present invention. In this embodiment of the present invention, an access terminal enables a WiFi transceiver, and the access terminal may be used as an AP or may be used as a single point to perform data transmission to a mobile terminal. The mobile terminal first performs data transmission to the access terminal by using WIFI. In this embodiment of the present invention, when the access terminal is an AP, multiple mobile terminals may connect to the access terminal, and methods for connecting to the access terminal by all mobile terminals are the same. An example that one mobile terminal performs data transmission to the access terminal is used for description in the following.

S401. The access terminal performs data transmission to the mobile terminal by using WIFI.

The mobile terminal performs data transmission to the access terminal by using WIFI, for example, watching a video, browsing a web page, implementing instant messaging, or listening to music. The access terminal then accesses a remote network by using Ethernet, WIFI, or a telecommunications network.

S402. The mobile terminal detects a rate of the data transmission.

That the mobile terminal detects a rate of the data transmission specifically may be: collecting statistics about traffic within a period of time, and calculating average traffic within a unit time according to the time and the collected traffic, where the average traffic within a unit time is the rate of the data transmission. For example, the mobile terminal continuously collects statistics about traffic of received data and sent data in three 20 seconds, and calculates the rate of the data transmission as 900 Kbps (Kbps).

S403. The mobile terminal determines, according to the rate of the data transmission, whether the rate is lower than a low rate threshold.

There are many manners of determining the low rate threshold, and the low rate threshold may be set for the mobile terminal during factory delivery; or the low rate threshold is set by a user after a lowest rate value of the data transmission is collected and a recommended low rate threshold is sent to the user according to a statistical result.

S404. When the rate of the data transmission is lower than the low rate threshold, the mobile terminal instructs the access terminal to perform data transmission to the mobile terminal by using Bluetooth.

For example, when the low rate threshold is 1.3 Mbps (Mbps), and the rate of the data transmission is 900 Kbps, that is, when the rate of the data transmission is lower than the low rate threshold, the mobile terminal instructs the access terminal to perform data transmission to the mobile terminal by using Bluetooth.

In another embodiment of the present invention, the mobile terminal may determine a distance between the mobile terminal and the access terminal so as to determine whether the distance between the mobile terminal and the access terminal meets a preset distance condition; and when the distance meets the preset distance condition, enable a Bluetooth transceiver.

In another embodiment of the present invention, the mobile terminal may also determine whether to enable a Bluetooth transceiver according to received signal strength of WiFi. When the received signal strength of WiFi meets a condition, the mobile terminal enables the Bluetooth transceiver. For example, the mobile terminal compares an RSSI (Received Signal Strength Indication, received signal strength indicator) with a signal strength threshold, and when the RSSI is higher than the signal strength threshold, that is, the received signal strength of WiFi meets the condition, it indicates that a distance between the mobile terminal and the access terminal falls within a distance range in which Bluetooth pairing can be successfully performed. When the received signal strength of WiFi does not meet the condition, the mobile terminal keeps connecting to the access terminal by using WIFI, and does not perform the following steps S405 to S407.

In another embodiment of the present invention, the access terminal may also detect a distance between the mobile terminal and the access terminal according to distance detection. The access terminal may determine, according to the detected distance between the mobile terminal and the access terminal, whether to perform the following steps S405 to S407.

In another embodiment of the present invention, when the mobile terminal instructs the access terminal to perform data transmission to the mobile terminal by using Bluetooth, an instruction further carries a Bluetooth pairing request for pairing with the access terminal. The mobile terminal stores a Bluetooth name of the access terminal, and according to the stored Bluetooth name of the access terminal, the mobile terminal includes the Bluetooth pairing request into an instruction of performing data transmission by using Bluetooth. The Bluetooth name may be an SSID of the access terminal, a MAC address of the access terminal, or a Bluetooth name named in the access terminal.

S405. The access terminal receives an instruction of performing data transmission to the mobile terminal by using Bluetooth.

S406. The access terminal performs data transmission to the mobile terminal by using Bluetooth.

Data during data transmission performed by the access terminal with the mobile terminal by using Bluetooth includes: to-be-sent data stored in a memory of the WiFi transceiver. The memory may be a cache.

In another embodiment of the present invention, according to the received instruction of performing data transmission to the mobile terminal by using Bluetooth, where the instruction carries a Bluetooth pairing request for pairing with the access terminal, the access terminal determines to perform data transmission with the mobile terminal.

In another embodiment of the present invention, a Bluetooth transceiver of the access terminal may be enabled when the access terminal determines to perform data transmission to the mobile terminal, or may be enabled when the access terminal performs data transmission to the mobile terminal by using WIFI, or may be enabled in another step. Enabling the Bluetooth transceiver of the access terminal is not limited in this embodiment of the present invention.

In another embodiment of the present invention, the access terminal successfully performs Bluetooth pairing with the access terminal according to the received Bluetooth pairing request. After the mobile terminal performs Bluetooth pairing with the access terminal, the mobile terminal establishes a PAN (Personal Area Network, personal area network) connection to the access terminal, and the access terminal performs data transmission to the mobile terminal by using Bluetooth.

When the access terminal is performing Bluetooth pairing with the access terminal in response to the Bluetooth pairing request, if a PIN (Personal Identification Number, personal identification number of a subscriber identity module card) needs to be entered, an application program inside the mobile terminal prompts a user to enter the PIN, and a password that is used when the mobile terminal is connected to the access terminal by using WiFi may also be automatically entered by the application program and used as the PIN to complete an automatic connection. Performing Bluetooth pairing in a manner of inputting a PIN ensures reliability of a Bluetooth connection, and furthermore according to the user's input, ensures security of the Bluetooth connection.

In another embodiment of the present invention, after the access terminal performs data transmission to the mobile terminal by using Bluetooth, the access terminal may further perform the following step:
S407. The access terminal disables a WiFi transceiver when the access terminal detects that data transmission is performed to the mobile terminal by using Bluetooth.

In a manner of first connecting to the Bluetooth transceiver and then disconnecting the WiFi transceiver, effectiveness of a data transmission service is maintained, and impact, on a user, caused by a switchover between communication links is reduced.

In this embodiment of the present invention, during low rate data transmission, when detecting that a rate of data transmission is lower than a low rate threshold, a mobile terminal automatically switches from performing data transmission with an access terminal by using WiFi to performing data transmission by using Bluetooth, which ensures seamless switchover experience of WiFi data transmission and Bluetooth data transmission during a switchover between low rate data transmission and high rate data transmission. Furthermore, when the access terminal and the mobile terminal maintain a WiFi connection, a relatively high power is needed; during a low rate data service, the access terminal switches to performing data transmission with the mobile terminal by using Bluetooth, which reduces total power consumption of the access terminal and the mobile terminal.

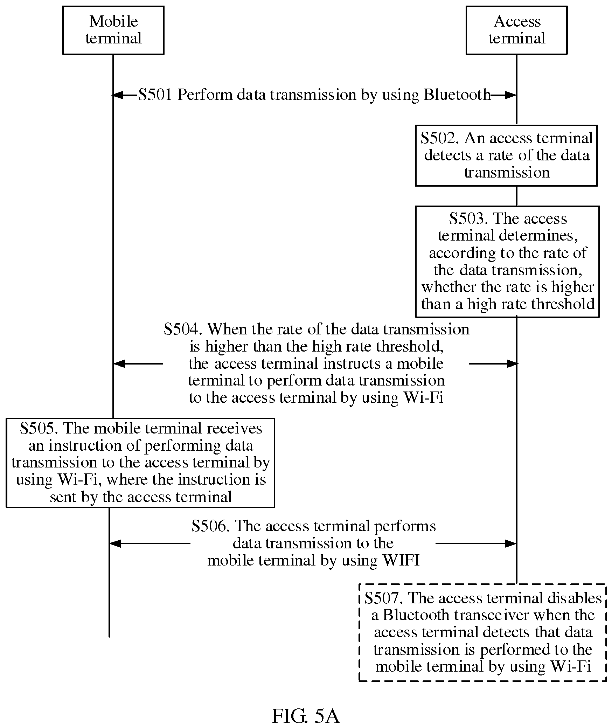

FIG. 5A is a schematic diagram of a data transmission method according to another embodiment of the present invention. In this embodiment of the present invention, an access terminal is used as an AP, the access terminal enables a Bluetooth transceiver, and a mobile terminal first connects to the access terminal by using Bluetooth. In this embodiment of the present invention, multiple mobile terminals may connect to the access terminal, and methods for connecting to the access terminal by all mobile terminals are the same. An example that one mobile terminal performs a data service with the access terminal is used for description in the following.

S501. The access terminal performs data transmission to the mobile terminal by using Bluetooth.

The mobile terminal may perform data transmission to the access terminal by using Bluetooth, for example, watching a video, browsing a web page, implementing instant messaging, or listening to music. The access terminal then accesses a remote network by using Ethernet, WIFI, or a telecommunications network.

S502. The access terminal detects a rate of the data transmission.

That the access terminal detects a rate of the data transmission specifically may be: collecting statistics about traffic within a period of time, and calculating average traffic within a unit time according to the time and the collected traffic, where the average traffic within a unit time is the rate of the data transmission. For example, the access terminal continuously collects statistics about traffic of received data and sent data in three 20 seconds, and calculates the rate of the data transmission as 2.5 Mbps (Mbps).

S503. The access terminal determines, according to the rate of the data transmission, whether the rate is higher than a high rate threshold.

There are many manners of determining the high rate threshold, and the high rate threshold may be set for the access terminal during factory delivery; or the high rate threshold is set by a user after a highest rate value of the data transmission is collected and a recommended high rate threshold is sent to the user according to a statistical result.

S504. When the rate of the data transmission is higher than the high rate threshold, the access terminal instructs the mobile terminal to perform data transmission to the access terminal by using WIFI.

For example, when the high rate threshold is 2.0 Mbps (Mbps), and the rate of the data transmission is 2.5 Mbps, that is, when the rate of the data transmission is higher than the high rate threshold, the access terminal instructs the mobile terminal to perform data transmission to the access terminal by using WIFI.

When the access terminal instructs the mobile terminal to perform data transmission to the access terminal by using WIFI, an instruction may be sent in a broadcast manner, a multicast manner, or a unicast manner.

That the access terminal sends a broadcast message to the mobile terminal specifically may be: The access terminal sends a predefined packet of a special format by using Bluetooth to a specific port of the mobile terminal, where the packet is used to instruct the mobile terminal to perform data transmission to the access terminal by using WIFI.

In another embodiment of the present invention, sending an instruction in the multicast manner or the unicast manner is similar to sending an instruction in the broadcast manner, and is not described herein again.

In another embodiment of the present invention, when the access terminal sends an instruction of performing data transmission to the access terminal by using WIFI, the instruction may carry an SSID of the access terminal.

S505. The mobile terminal receives an instruction of performing data transmission to the access terminal by using WIFI, where the instruction is sent by the access terminal.

S506. The access terminal performs data transmission to the mobile terminal by using WIFI.

Data during data transmission performed by the access terminal to the mobile terminal by using WiFi includes: to-be-sent data stored in a memory of the Bluetooth transceiver.

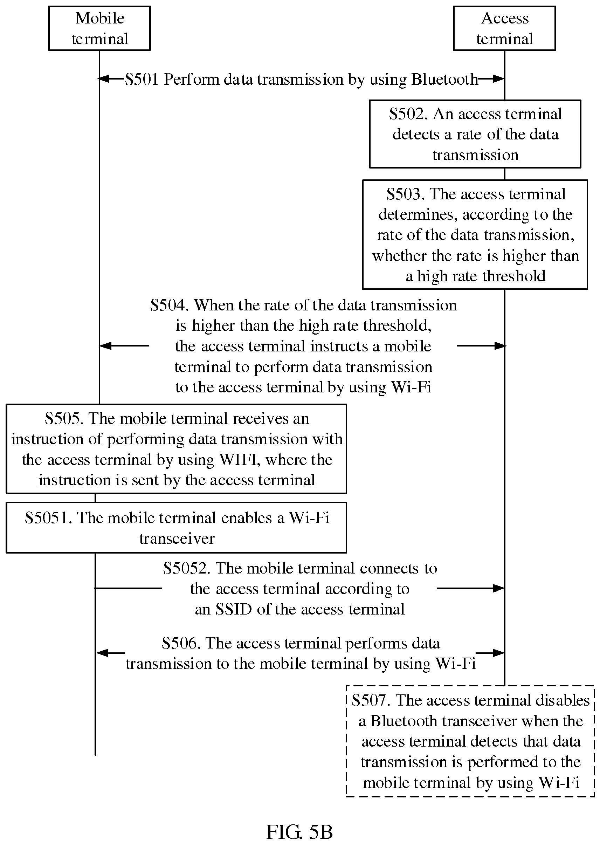

FIG. 5B is a schematic diagram of a switchover method of data transmission according to another embodiment of the present invention. In another embodiment of the present invention, after performing step S505, and before performing S506, the mobile terminal may further perform:

S5051. The mobile terminal enables a WiFi transceiver.

In another embodiment of the present invention, after receiving an instruction from the access terminal, the mobile terminal may determine a distance between the mobile terminal and the access terminal, so as to determine whether the distance between the mobile terminal and the access terminal meets a preset distance condition; and when the distance meets the preset distance condition, enable a Bluetooth transceiver.

In another embodiment of the present invention, the mobile terminal determine to enable the WiFi transceiver according to received signal strength of Bluetooth. When the received signal strength of Bluetooth meets a condition, the mobile terminal enables the WiFi transceiver. For example, the mobile terminal compares an RSSI (Received Signal Strength Indication, received signal strength indicator) with a signal strength threshold, and when the RSSI is higher than the signal strength threshold, that is, the received signal strength of Bluetooth meets the condition, it indicates that a distance between the mobile terminal and the access terminal falls within a distance range in which WiFi connecting can be successfully performed. When the RSSI is lower than the signal strength threshold, that is, the received signal strength of Bluetooth does not meet the condition, it indicates that the distance between the mobile terminal and the access terminal falls within a distance range in which WiFi connecting cannot be successfully performed. Therefore, the mobile terminal keeps connecting to the access terminal by using Bluetooth, and does not perform the following steps S5052 to S507.

In another embodiment of the present invention, after receiving an instruction from the access terminal, the mobile terminal may further detect, according to distance detection, the distance between the mobile terminal and the access terminal to determine whether to enable the WiFi transceiver.

In another embodiment of the present invention, the access terminal may also detect a distance between the mobile terminal and the access terminal according to distance detection. The access terminal may determine, according to the detected distance between the mobile terminal and the access terminal, whether to perform the following steps S5052 to S307.

In the present invention, there are many methods used for determining the distance between the mobile terminal and the access terminal, which are described herein only by using an example; and details are not described herein again.

S5052. The mobile terminal connects to the access terminal according to an SSID of the access terminal.

When the SSID of the access terminal is carried in an instruction of WiFi transmission, the mobile terminal connects to the access terminal according to the SSID of the access terminal.

In another embodiment of the present invention, when the SSID of the access terminal is not carried in an instruction of WiFi transmission, that the mobile terminal stores the SSID of the access terminal specifically may be: When the mobile terminal performs data transmission to the access terminal by using Bluetooth, the access terminal may send the SSID to the mobile terminal for storing.

When the access terminal performs data transmission to the mobile terminal by using WIFI, if a PIN (Personal Identification Number, personal identification number of a subscriber identity module card) needs to be entered, an application program inside the mobile terminal prompts a user to enter the PIN, and a password that is used when the mobile terminal is connected to the access terminal by using Bluetooth may also be automatically entered by the application program and used as the PIN to complete an automatic connection. Performing WiFi connecting in a manner of inputting a PIN ensures reliability of a WiFi connection, and furthermore according to the user's input, ensures security of the WiFi connection.

In another embodiment of the present invention, after the access terminal performs data transmission to the mobile terminal by using WIFI, the access terminal may further perform the following step:

S507. The access terminal disables a Bluetooth transceiver when the access terminal detects that data transmission is performed to the mobile terminal by using WIFI.

In a manner of first connecting to the WiFi transceiver and then disconnecting the Bluetooth transceiver, effectiveness of a data transmission service is maintained, and impact, on a user, caused by a switchover between communication links is reduced.

In this embodiment of the present invention, during a high rate data service, an access terminal automatically switches from performing data transmission by using Bluetooth to performing data transmission by using WIFI, which ensures seamless switchover experience of WiFi data transmission and Bluetooth data transmission during high rate data transmission.

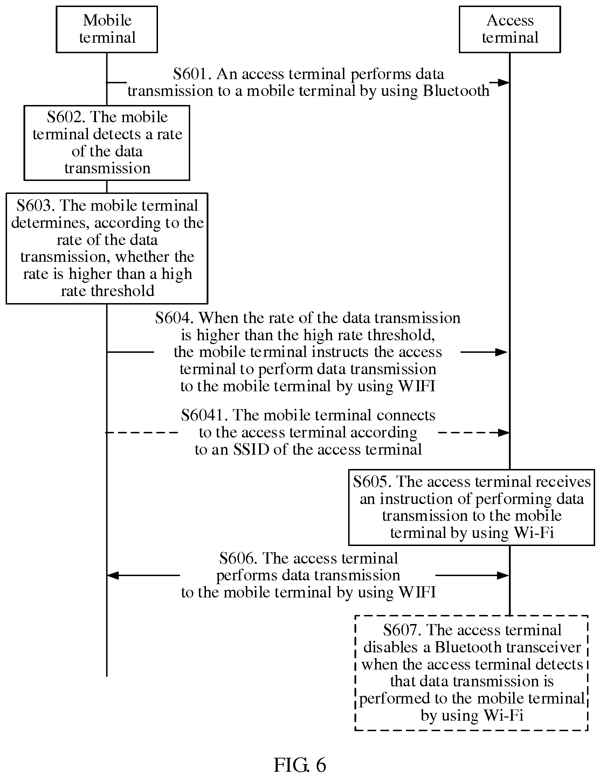

FIG. 6 is a schematic diagram of a data transmission method according to another embodiment of the present invention. In this embodiment of the present invention, an access terminal enables a Bluetooth transceiver, and the access terminal may be used as an AP or may be used as a single point to perform data transmission with a mobile terminal. The mobile terminal first performs data transmission to the access terminal by using Bluetooth. In this embodiment of the present invention, when the access terminal is an AP, multiple mobile terminals may connect to the access terminal, and methods for connecting to the access terminal by all mobile terminals are the same. An example that one mobile terminal performs data transmission to the access terminal is used for description in the following.

S601. The access terminal performs data transmission to the mobile terminal by using Bluetooth.

The mobile terminal performs data transmission to the access terminal by using Bluetooth, for example, watching a video, browsing a web page, implementing instant messaging, or listening to music. The access terminal then accesses a remote network by using Ethernet, WIFI, or a telecommunications network.

S602. The mobile terminal detects a rate of the data transmission.

That the mobile terminal detects a rate of the data transmission specifically may be: collecting statistics about traffic within a period of time, and calculating average traffic within a unit time according to the time and the collected traffic, where the average traffic within a unit time is the rate of the data transmission. For example, the mobile terminal continuously collects statistics about traffic of received data and sent data in three 20 seconds, and calculates the rate of the data transmission as 2.5 Mbps.

S603. The mobile terminal determines, according to the rate of the data transmission, whether the rate is higher than a high rate threshold.

There are many manners of determining the high rate threshold, and the high rate threshold may be set for the mobile terminal during factory delivery; or the high rate threshold is set by a user after a highest rate value of the data transmission is collected and a recommended high rate threshold is sent to the user according to a statistical result.

S604. When the rate of the data transmission is higher than the high rate threshold, the mobile terminal instructs the access terminal to perform data transmission to the mobile terminal by using WIFI.

For example, when the high rate threshold is 2.0 Mbps (Mbps), and the rate of the data transmission is 2.5 Kbps, that is, when the rate of the data transmission is higher than the high rate threshold, the mobile terminal instructs the access terminal to perform data transmission to the mobile terminal by using WIFI.

In another embodiment of the present invention, the mobile terminal may determine a distance between the mobile terminal and the access terminal so as to determine whether the distance between the mobile terminal and the access terminal meets a preset distance condition; and when the distance meets the preset distance condition, enable a WiFi transceiver.

In another embodiment of the present invention, the mobile terminal may also determine whether to enable a WiFi transceiver according to received signal strength of Bluetooth. When the received signal strength of Bluetooth meets a condition, the mobile terminal enables the WiFi transceiver. For example, the mobile terminal compares an RSSI (Received Signal Strength Indication, received signal strength indicator) with a signal strength threshold, and when the RSSI is higher than the signal strength threshold, that is, the received signal strength of Bluetooth meets the condition, it indicates that a distance between the mobile terminal and the access terminal falls within a distance range in which WiFi connecting can be successfully performed. When the received signal strength of Bluetooth does not meet the preset condition, the mobile terminal maintains connecting to the access terminal by using Bluetooth, and does not perform the following steps S605 to S607.

In another embodiment of the present invention, the access terminal may also detect a distance between the mobile terminal and the access terminal according to distance detection. The access terminal may determine, according to the detected distance between the mobile terminal and the access terminal, whether to perform the following steps S605 to S407.

In another embodiment of the present invention, when the mobile terminal instructs the access terminal to perform data transmission to the mobile terminal by using Bluetooth, an instruction further carries a Bluetooth pairing request for pairing with the access terminal. The mobile terminal stores a Bluetooth name of the access terminal, and according to the stored Bluetooth name of the access terminal, the mobile terminal includes the Bluetooth pairing request into an instruction of performing data transmission by using Bluetooth. The Bluetooth name may be an SSID of the access terminal, a MAC address of the access terminal, or a Bluetooth name named in the access terminal.

In another embodiment of the present invention, after the mobile terminal instructs the access terminal to perform data transmission to the mobile terminal by using WIFI, the mobile terminal may further perform step S6041:
S6041. The mobile terminal connects to the access terminal according to an SSID of the access terminal.

The mobile terminal stores the SSID of the access terminal, and the mobile terminal sends a WiFi connecting request to the access terminal according to the stored SSID of the access terminal. The SSID may be a MAC address of the access terminal or an SSID named by the access terminal.

S605. The access terminal receives an instruction of performing data transmission to the mobile terminal by using WIFI.

S606. The access terminal performs data transmission to the mobile terminal by using WIFI.

Data during data transmission performed by the access terminal to the mobile terminal by using WiFi includes: to-be-sent data stored in a memory of the Bluetooth transceiver. When the access terminal performs data transmission with the mobile terminal by using WIFI, if a PIN (Personal Identification Number, personal identification number of a subscriber identity module card) needs to be entered, an application program inside the mobile terminal prompts a user to enter the PIN, and a password that is used when the mobile terminal is connected to the access terminal by using Bluetooth may also be automatically entered by the application program and used as the PIN to complete an automatic connection. Performing WiFi connecting in a manner of inputting a PIN ensures reliability of a WiFi connection, and furthermore according to the user's input, ensures security of the WiFi connection.

In another embodiment of the present invention, after the access terminal detects that data transmission is performed to the mobile terminal by using WIFI, the access terminal may further perform the following step:

S607. The access terminal disables a Bluetooth transceiver when the access terminal detects that data transmission is performed to the mobile terminal by using WIFI.

In a manner of first connecting to the WiFi transceiver and then disconnecting the Bluetooth transceiver, effectiveness of data transmission is maintained, and impact, on a user, caused by a switchover between communication links is reduced.

In this embodiment of the present invention, during a high rate data service, an access terminal automatically switches from performing data transmission by using Bluetooth to performing data transmission by using WIFI, which ensures seamless switchover experience of WiFi data transmission and Bluetooth data transmission during high rate data transmission.

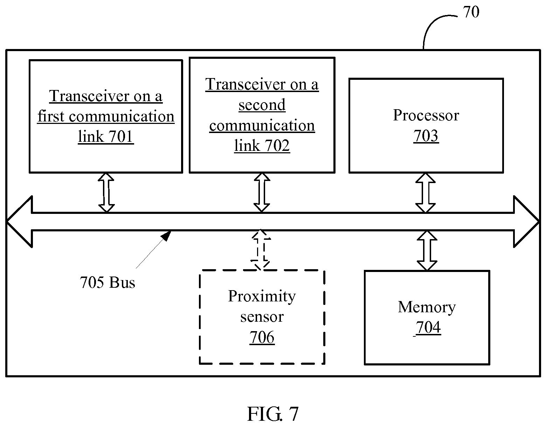

FIG. 7 is a structural diagram of a first terminal 70 of data transmission according to an embodiment of the present invention. The first terminal 70 may be configured to perform the methods in the foregoing method embodiments of the present invention. FIG. 7 shows a structure of the first terminal 70 provided in this embodiment of the present invention.

The first terminal 70 may be a terminal device, such as a mobile phone, a PC (Personal Computer, personal computer), a tablet computer PAD, a wireless router, a portable router, or a WiFi modem.

A second terminal involved in this embodiment of the present invention may also be a terminal device, such as a mobile phone, a PC (Personal Computer, personal computer), a tablet computer PAD, a wireless router, a portable router, or a WiFi modem.

The structure of the first terminal shown in FIG. 7 is only used as an example of an implementation manner, does not constitute a limitation on the first terminal, and may include more or less components than components shown in the figure; or combines some components, or has different component deployments.

The first terminal 70 includes: a transceiver on a first communication link 701, a transceiver on a second communication link 702, a processor 703, a memory 704, and a bus 705.

The transceiver on the first communication link 701 may be integrated into a WiFi chip that supports at least one protocol of 802.11 a, 802.11 b, 802.11g, 802.11n, and 802.11ac; may be integrated into a Bluetooth chip that supports at least one protocol of Bluetooth 2.0, Bluetooth 3.0, and Bluetooth 4.0; or may be integrated into a composite communication chip that supports functions of Bluetooth data transmission and WiFi data transmission. By using the bus 705, a received instruction is sent to the processor or an instruction from the processor is received.

The transceiver on the second communication link 702 may be integrated into a WiFi chip that supports at least one protocol of 802.11 a, 802.11 b, 802.11g, 802.11n, and 802.11ac; may be integrated into a Bluetooth chip that supports at least one protocol of Bluetooth 2.0, Bluetooth 3.0, and Bluetooth 4.0; or may be integrated into a composite communication chip that supports functions of Bluetooth data transmission and WiFi data transmission. By using the bus 705, a received instruction is sent to the processor or an instruction from the processor is received.

When the transceiver on the first communication link 701 is a WiFi transceiver, the transceiver on the second communication link 702 is a Bluetooth transceiver. When the transceiver on the first communication link 701 is a Bluetooth transceiver, the transceiver on the second communication link 702 is a WiFi transceiver.

The memory 704 may include a RAM and a ROM, or any fixed storage medium, or a removable storage medium, and is configured to store a program that can execute this embodiment of the present invention or an application database in this embodiment of the present invention. By using the bus 705, the memory 704 receives input of other components or information stored in the memory 704 is invoked by other components, such as a preset rate condition and an instruction of instructing the second terminal to perform data transmission to the first terminal by using a second communication link.

The processor 703 is configured to execute a program of this embodiment of the present invention that is stored in the memory 704, and perform bidirectional communication with other apparatuses by using the bus.

The processor 703 and the memory 703 may also be integrated as a physical module that implements this embodiment of the present invention, and a program that implements this embodiment of the present invention is stored and runs on the physical module.

Components of the access terminal 70 are coupled together by using a bus system 705, where the bus system 705 may further include a power bus, a control bus, a state signal bus, and the like in addition to a data bus. However, for clarity of description, various buses are marked as the bus 705 in the figure.

In this embodiment of the present invention, units of the first terminal 70 separately execute the following content.

The transceiver on the first communication link 701 is configured to perform data transmission to the second terminal by using a first communication link.

The processor 703 is configured to detect a rate of the data transmission; determine, according to the rate of the data transmission, whether a preset rate condition is met; when the rate of the data transmission meets the preset rate condition, instruct the second terminal to perform data transmission to the first terminal by using the second communication link; and instruct the transceiver on the second communication link 702 to perform data transmission to the second terminal by using the second communication link.

The transceiver on the second communication link 702 is configured to perform data transmission to the second terminal by using the second communication link.

The memory 704 is configured to store the preset rate condition and store the transmitted data.

In another embodiment of the present invention, before the processor 703 instructs the transceiver on the second communication link 702 to perform data transmission to the second terminal by using the second communication link, the processor 703 may further determine whether a distance from the second terminal meets a preset distance condition or determine whether received signal strength meets a preset signal strength condition.

For example, when determining that the rate of the data transmission meets the preset rate condition, the processor 703 may determine whether the distance from the second terminal meets the preset distance condition or determine whether the received signal strength meets the preset signal strength condition; and when a result of the determining is that the preset condition is met, instruct the second terminal to perform data transmission to the first terminal 70 by using the second communication link.

When instructing the transceiver on the second communication link 702 to perform data transmission to the second terminal by using the second communication link, the processor 703 may also determine whether the distance from the second terminal meets the preset distance condition or determine whether the received signal strength meets the preset signal strength condition; and when a result of the determining is that the preset condition is met, instruct the transceiver on the second communication link 702 to perform data transmission to the second terminal by using the second communication link.

In another embodiment of the present invention, the first terminal 70 further includes a proximity sensor 706. The processor 703 may instruct the proximity sensor 706 to detect a distance from the second terminal, and the processor 703 determines, according to the distance from the second terminal that is detected by the proximity sensor 706, whether a preset distance condition is met.

In another embodiment of the present invention, the second terminal may also be used to detect a distance from the first terminal 70, and the processor 703 determines, according to the distance from the first terminal 70 that is detected by the second terminal, whether a preset distance condition is met.

Similar to the manner of determining the distance between the first terminal 70 and the second terminal, the processor 703 may also determine, according to the received signal strength of the transceiver on the first communication link 701, whether the signal strength meets the preset signal strength condition, or determine, according to signal strength detected by the second terminal, whether the signal strength meets the preset signal strength condition.

In this embodiment of the present invention, it is not limited that the first terminal 70 or the second terminal determines whether the distance meets the preset distance condition, and it is also not limited that the first terminal 70 or the second terminal determines whether the received signal strength meets the preset signal strength condition. Determining whether the distance between the first terminal 70 and the second terminal meets the preset distance condition, or determining whether the received signal strength meets the preset signal strength condition is to ensure effectiveness of a switchover from performing data transmission by using the first communication link to performing data transmission by using the second communication link. Therefore, an unsuccessful switchover caused by that the distance does not meet the condition or the received signal strength does not meet the condition is avoided.

In another embodiment of the present invention, the processor 703 is further configured to detect that data transmission is performed to the second terminal by using the second communication link; and when detecting that data transmission is performed to the second terminal by using the second communication link, the processor 703 disables the transceiver on the first communication link 701.

When the first communication link is WIFI, and the second communication link is Bluetooth,
that the rate of the data transmission meets the preset rate condition is specifically that the rate of the data transmission is lower than a low rate threshold.

The processor 703 instructs the second terminal to switch from performing data transmission with the first terminal 70 by using WiFi to performing data transmission with the first terminal 70 by using Bluetooth.

During low rate data transmission, the first terminal automatically switches from WiFi data transmission to Bluetooth data transmission, which ensures seamless switchover experience of WiFi data transmission and Bluetooth data transmission during low rate and high rate data transmission; furthermore, when the first terminal maintains a connection to a WiFi transceiver, a relatively high power is needed; and during a low rate data service, the first terminal switches to performing data transmission with the second terminal by using Bluetooth, which reduces power consumption of the access terminal and the mobile terminal.

When the first communication link is Bluetooth and the second communication link is WIFI,
that the rate of the data transmission meets the preset rate condition is specifically that the rate of the data transmission is higher than a high rate threshold.

The processor 703 instructs the second terminal to switch from performing data transmission to the first terminal 70 by using Bluetooth to performing data transmission to the first terminal 70 by using WIFI.

During a high rate data service, the first terminal automatically switches from performing data transmission by using Bluetooth to performing data transmission by using WIFI, which ensures seamless switchover experience of WiFi data transmission and Bluetooth data transmission during high rate data transmission.

In this embodiment of the present invention, during data transmission at different rates, a first terminal detects a rate of data transmission; and when the rate of the data transmission meets a preset rate condition, automatically switches from performing data transmission with a mobile terminal by using a first communication link to performing data transmission with the mobile terminal by using a second communication link, which ensures seamless switchover experience of data transmission over two data links during low rate and high rate data transmission. Furthermore, on a condition that data transmission is performed at different rates, different data transmission channels are selected, which reduces total power consumption of the first terminal and the second terminal.

A person of ordinary skill in the art may be aware that, in combination with the examples described in the embodiments disclosed in this specification, units, algorithms, and method steps may be implemented by a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, the foregoing mobile terminal and access terminal separately perform a working process in the described method embodiments of the present invention; and for specific working, reference may be made to a corresponding process in the foregoing method embodiments, and details are not described herein again.

In the several embodiments provided in the present application, the disclosed method may be implemented in other manners. For example, the described server embodiment is merely exemplary. For example, the unit division is merely logical function division and may be another division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit.

A person of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data transmission method, wherein the method comprises:
performing (S201), by a first terminal, data transmission to a second terminal by using a first communication link;
detecting (S202), by the first terminal, a rate of the data transmission;
determining (S203), by the first terminal according to the rate of the data transmission, whether a preset rate condition is met;
when the rate of the data transmission meets the preset rate condition, instructing (S204), by the first terminal, the second terminal to perform data transmission to the first terminal by using a second communication link; and
performing (S205), by the first terminal, data transmission to the second terminal by using the second communication link;
wherein when the first communication link is specifically a Wireless Fidelity, WiFi, communication link,
the second communication link is specifically a Bluetooth communication link, and
that the rate of the data transmission meets the preset rate condition is specifically that the rate of the data transmission is lower than a low rate threshold;
wherein when the first communication link is specifically a Bluetooth communication link,
the second communication link is specifically a WiFi communication link, and
that the rate of the data transmission meets the preset rate condition is specifically that the rate of the data transmission is higher than a high rate threshold;
wherein the high rate threshold is higher than the low rate threshold.

2. The data transmission method according to claim 1, wherein data transmitted by using the second communication link comprises: to-be-sent data stored in a memory of a transceiver on the first communication link.

3. The data transmission method according to any one of claims 1 to 2, wherein when detecting that data transmission is performed to the second terminal by using the second communication link, the first terminal disables the transceiver on the first communication link.

4. A first terminal of data transmission (70), wherein the first terminal (70) comprises: a transceiver on a first communication link (701), a transceiver on a second communication link (702), a processor (703), and a memory (704), wherein:
the transceiver on the first communication link (701) is configured to perform data transmission to a second terminal by using the first communication link;
the processor is configured to detect a rate of the data transmission; determine, according to the rate of the data transmission, whether a preset rate condition is met; when the rate of the data transmission meets the preset rate condition, instruct the second terminal to perform data transmission to the first terminal (70) by using the second communication link; and instruct the transceiver on the second communication link (702) to perform data transmission to the second terminal by using the second communication link; and
the transceiver on the second communication link (702) is configured to perform data transmission to the second terminal by using the second communication link;
wherein when the first communication link is specifically a Wireless Fidelity, WiFi, communication link,
the second communication link is specifically a Bluetooth communication link, and
that the rate of the data transmission meets the preset rate condition is specifically that the rate of the data transmission is lower than a low rate threshold;
wherein when the first communication link is specifically a Bluetooth communication link,
the second communication link is specifically a WiFi communication link, and
that the rate of the data transmission meets the preset rate condition is specifically that the rate of the data transmission is higher than a high rate threshold;
wherein the high rate threshold is higher than the low rate threshold.

5. The first terminal of data transmission according to claim 4, wherein the transceiver on the first communication link (701) comprises the memory (704), wherein:
the memory (704) is configured to store data received and sent by the transceiver on the first communication link (701); and
data transmitted by using the second communication link comprises: to-be-sent data stored in the memory (704) of the transceiver on the first communication link (701).

6. The first terminal of data transmission according to any one of claims 4 to 5, wherein the processor (703) is further configured to detect that data transmission is performed to the second terminal by using the second communication link; and when detecting that data transmission is performed to the second terminal by using the second communication link, the processor (703) disables the transceiver on the first communication link (701).

## Patentansprüche

1. Datenübertragungsverfahren, wobei das Verfahren Folgendes umfasst:
Durchführen (S201), durch ein erstes Endgerät, einer Datenübertragung an ein zweites Endgerät durch Verwendung einer ersten Kommunikationsverbindung;
Erkennen (S202), durch das erste Endgerät, einer Datenübertragungsrate;
Bestimmen (S203), durch das erste Endgerät, gemäß der Datenübertragungsrate, ob eine voreingestellte Ratenbedingung erfüllt wird;
wenn die Datenübertragungsrate die voreingestellte Ratenbedingung erfüllt, Anweisen (S204), durch das erste Endgerät, des zweiten Endgerätes zum Durchführen einer Datenübertragung an das erste Endgerät durch Verwendung einer zweiten Kommunikationsverbindung; und
Durchführen (S205), durch das erste Endgerät, einer Datenübertragung an das zweite Endgerät durch Verwendung der zweiten Kommunikationsverbindung;
wobei, wenn die erste Kommunikationsverbindung spezifisch eine "Wireless Fidelity"(WiFi)-Kommunikationsverbindung ist, die zweite Kommunikationsverbindung spezifisch eine Bluetooth-Kommunikationsverbindung ist, und dass die Datenübertragungsrate die voreingestellte Ratenbedingung erfüllt, spezifisch ist, dass die Datenübertragungsrate niedriger als eine niedrige Ratenschwelle ist;
wobei, wenn die erste Kommunikationsverbindung spezifisch eine Bluetooth-Kommunikationsverbindung ist, die zweite Kommunikationsverbindung spezifisch eine WiFi-Kommunikationsverbindung ist, und dass die Datenübertragungsrate die voreingestellte Ratenbedingung erfüllt, spezifisch ist, dass die Datenübertragungsrate höher als eine hohe Ratenschwelle ist;
wobei die hohe Ratenschwelle höher als die niedrige Ratenschwelle ist.

2. Datenübertragungsverfahren nach Anspruch 1, wobei Daten, die durch Verwendung der zweiten Kommunikationsverbindung übertragen werden, Folgendes umfassen: zu sendende Daten, die in einem Speicher eines Sendeempfängers in der ersten Kommunikationsverbindung gespeichert sind.

3. Datenübertragungsverfahren nach einem der Ansprüche 1 bis 2, wobei, wenn erkannt wird, dass die Datenübertragung an das zweite Endgerät durch Verwendung der zweiten Kommunikationsverbindung durchgeführt wird, das erste Endgerät den Sendeempfänger in der ersten Kommunikationsverbindung deaktiviert.

4. Erstes Endgerät zur Datenübertragung (70), wobei das erste Endgerät (70) Folgendes umfasst: einen Sendeempfänger in einer ersten Kommunikationsverbindung (701), einen Sendeempfänger in einer zweiten Kommunikationsverbindung (702), einen Prozessor (703) und einen Speicher (704), wobei:
der Sendeempfänger in der ersten Kommunikationsverbindung (701) konfiguriert ist zum Durchführen einer Datenübertragung an ein zweites Endgerät durch Verwendung der ersten Kommunikationsverbindung;
der Prozessor konfiguriert ist zum Erkennen einer Datenübertragungsrate; Bestimmen, gemäß der Datenübertragungsrate, ob eine voreingestellte Ratenbedingung erfüllt wird; wenn die Datenübertragungsrate die voreingestellte Ratenbedingung erfüllt, Anweisen des zweiten Endgerätes zum Durchführen einer Datenübertragung an das erste Endgerät (70) durch Verwendung der zweiten Kommunikationsverbindung; und Anweisen des Sendeempfängers in der zweiten Kommunikationsverbindung (702) zum Durchführen einer Datenübertragung an das zweite Endgerät durch Verwendung der zweiten Kommunikationsverbindung; und
der Sendeempfänger in der zweiten Kommunikationsverbindung (702) konfiguriert ist zum Durchführen einer Datenübertragung an das zweite Endgerät durch Verwendung der zweiten Kommunikationsverbindung;
wobei, wenn die erste Kommunikationsverbindung spezifisch eine "Wireless Fidelity"(WiFi)-Kommunikationsverbindung ist, die zweite Kommunikationsverbindung spezifisch eine Bluetooth-Kommunikationsverbindung ist, und dass die Datenübertragungsrate die voreingestellte Ratenbedingung erfüllt, spezifisch ist, dass die Datenübertragungsrate niedriger als eine niedrige Ratenschwelle ist;
wobei, wenn die erste Kommunikationsverbindung spezifisch eine Bluetooth-Kommunikationsverbindung ist, die zweite Kommunikationsverbindung spezifisch eine WiFi-Kommunikationsverbindung ist, und dass die Datenübertragungsrate die voreingestellte Ratenbedingung erfüllt, spezifisch ist, dass die Datenübertragungsrate höher als eine hohe Ratenschwelle ist;
wobei die hohe Ratenschwelle höher als die niedrige Ratenschwelle ist.

5. Erstes Endgerät zur Datenübertragung nach Anspruch 4, wobei der Sendeempfänger in der ersten Kommunikationsverbindung (701) den Speicher (704) umfasst, wobei:
der Speicher (704) konfiguriert ist zum Speichern von Daten, die durch den Sendeempfänger in der ersten Kommunikationsverbindung (701) empfangen und gesendet werden; und
Daten, die durch Verwendung der zweiten Kommunikationsverbindung übertragen werden, Folgendes umfassen: zu sendende Daten, die in dem Speicher (704) eines Sendeempfängers in der ersten Kommunikationsverbindung (701) gespeichert sind.

6. Erstes Endgerät zur Datenübertragung nach einem der Ansprüche 4 bis 5, wobei der Prozessor (703) ferner konfiguriert ist zum Erkennen, dass eine Datenübertragung an das zweite Endgerät durch Verwendung der zweiten Kommunikationsverbindung durchgeführt wird; und wenn erkannt wird, dass eine Datenübertragung an das zweite Endgerät durch Verwendung der zweiten Kommunikationsverbindung durchgeführt wird, der Prozessor (703) den Sendeempfänger in der ersten Kommunikationsverbindung (701) deaktiviert.

## Revendications

1. Procédé de transmission de données, le procédé comprenant :
la réalisation (S201), par un premier terminal, d'une transmission de données à un second terminal au moyen d'une première liaison de communication ;
la détection (S202), par le premier terminal, d'une vitesse de la transmission de données ;
la détermination (S203), par le premier terminal en fonction de la vitesse de la transmission de données, du fait qu'une condition de vitesse prédéfinie est satisfaite ou non ;
lorsque la vitesse de la transmission de données satisfait la condition de vitesse prédéfinie, l'instruction (S204), par le premier terminal, au second terminal de réaliser une transmission de données au premier terminal à l'aide d'une seconde liaison de communication ; et
la réalisation (S205), par le premier terminal, de la transmission de données au second terminal à l'aide de la seconde liaison de communication ;
lorsque la première liaison de communication est spécifiquement une liaison de communication sans fil WiFi,
la seconde liaison de communication étant spécifiquement une liaison de communication Bluetooth, et
le fait que la vitesse de la transmission de données satisfait la condition de vitesse prédéfinie étant spécifiquement que la vitesse de la transmission de données est inférieure à un seuil de vitesse faible ;
lorsque la première liaison de communication est spécifiquement une liaison de communication Bluetooth,
la seconde liaison de communication étant spécifiquement une liaison de communication WiFi, et
le fait que la vitesse de la transmission de données satisfait la condition de vitesse prédéfinie étant spécifiquement que la vitesse de la transmission de données est supérieure à un seuil de vitesse élevée ;
le seuil de vitesse élevée étant supérieur au seuil de vitesse faible.

2. Procédé de transmission de données selon la revendication 1, des données transmises à l'aide de la seconde liaison de communication comprenant : des données à envoyer stockées dans une mémoire d'un émetteur-récepteur sur la première liaison de communication.

3. Procédé de transmission de données selon l'une quelconque des revendications 1 à 2, dans lequel lors de la détection de la transmission de données au second terminal, à l'aide de la seconde liaison de communication, le premier terminal désactive l'émetteur-récepteur sur la première liaison de communication.

4. Premier terminal de transmission de données (70), le premier terminal (70) comprenant : un émetteur-récepteur sur une première liaison de communication (701), un émetteur-récepteur sur une seconde liaison de communication (702), un processeur (703), et une mémoire (704),
l'émetteur-récepteur sur la première liaison de communication (701) étant configuré pour réaliser une transmission de données à un second terminal à l'aide de la première liaison de communication ;
le processeur étant configuré pour détecter une vitesse de la transmission de données ; déterminer, en fonction de la vitesse de la transmission de données, si une condition de vitesse prédéfinie est satisfaite ou non ; lorsque la vitesse de la transmission de données satisfait la condition de vitesse prédéfinie, donner l'instruction au second terminal de réaliser une transmission de données au premier terminal (70) à l'aide de la seconde liaison de communication ; et donner l'instruction à l'émetteur-récepteur sur la seconde liaison de communication (702) de réaliser une transmission de données au second terminal à l'aide de la seconde liaison de communication ; et l'émetteur-récepteur sur la seconde liaison de communication (702) étant configuré pour réaliser une transmission de données au second terminal à l'aide de la seconde liaison de communication ;
lorsque la première liaison de communication est spécifiquement une liaison de communication sans fil WiFi,
la seconde liaison de communication étant spécifiquement une liaison de communication Bluetooth,
et
le fait que la vitesse de la transmission de données satisfait la condition de vitesse prédéfinie étant spécifiquement que la vitesse de la transmission de données est inférieure à un seuil de vitesse faible ;
lorsque la première liaison de communication est spécifiquement une liaison de communication Bluetooth,
la seconde liaison de communication étant spécifiquement une liaison de communication WiFi, et
le fait que la vitesse de la transmission de données satisfait la condition de vitesse prédéfinie étant spécifiquement que la vitesse de la transmission de données est supérieure à un seuil de vitesse élevée ;
le seuil de vitesse élevée étant supérieur au seuil de vitesse faible.

5. Premier terminal de transmission de données selon la revendication 4, l'émetteur-récepteur sur la première liaison de communication (701) comprenant la mémoire (704) :
la mémoire (704) étant configurée pour stocker des données reçues et envoyées par l'émetteur-récepteur sur la première liaison de communication (701) ; et
les données transmises à l'aide de la seconde liaison de communication comprenant : des données à envoyer stockées dans la mémoire (704) de l'émetteur-récepteur sur la première liaison de communication (701).

6. Premier terminal de transmission de données selon l'une quelconque des revendications 4 à 5, dans lequel le processeur (703) est en outre configuré pour détecter que la transmission de données au second terminal est réalisée à l'aide de la seconde liaison de communication ; et lorsqu'il est détecté que la transmission de données au second terminal est réalisée à l'aide de la seconde liaison de communication, le processeur (703) désactive l'émetteur-récepteur sur la première liaison de communication (701).
